# FASCICULE DE BREVET EUROPEEN

(11) **EP 0 815 937 B1**
(45) Date de publication et mention de la délivrance du brevet: **27.08.2003**
(21) Numéro de dépôt: 97401349.2
(22) Date de dépôt: 13.06.1997
(51) Int. Cl.: B01J 19/12, B29C 59/14

(54) **Procédé pour augmenter l'anti-mouillabilité d'un corps, corps ainsi traité.**
Verfahren zum Erhöhen der Anti-Benetzbarkeit eines Körpers, Körper dementsprechend behandelt.
Process for increasing the anti-wettability of a body, body thus treated.

(30) Priorité: 28.06.1996 FR 9608073
(43) Date de publication de la demande: 07.01.1998
(73) Titulaire: CONTE S.A., 62200 Boulogne sur Mer (FR)
(72) Inventeur: Goudmand, Pierre, 59800 Lille (FR); Dessaux, Odile, 59800 Lille (FR); Quensierre, Jean Denis, 59170 Croix (FR); Bedhome, Vincent, 62240 Desvres (FR); Chavatte, Philippe, 62200 Boulogne sur mer (FR); Duez, José, 62200 Boulogne Sur Mer (FR)
(74) Mandataire: Keib, Gérard

(56) Documents cités:
- EP-A- 0 254 424
- EP-A- 0 343 038
- DE-A- 4 141 805
- US-A- 5 147 678
- US-A- 5 360 455
- US-A- 5 447 756

## Description

La présente invention concerne un procédé pour augmenter l'anti-mouillabilité d'un corps - ou pour rendre celui-ci plus hydrophobe vis-à-vis d'un fluide.

L'invention vise également les corps obtenus après traitement selon le procédé selon l'invention.

Ces corps peuvent être des corps poreux directement traités par un procédé plasma ou par des corps obtenus par frittage de billes traitées selon un procédé plasma.

Dans de nombreuses applications on cherche à augmenter la mouillabilité d'un corps poreux vis-à-vis d'un fluide. DE-A-4141805 décrit traitements des plastiques au plasma. EP-A-0 343 038 décrit un procédé de traitement des surfaces au plasma différé.

L'une de ces applications concerne les pointes d'écriture de marqueurs. Ainsi dans la demande de brevent français n° 96 01 700 du 12 Février 1996 publiée avec le numéro de brevet français FR-A-2 744 649 décrit un procédé permettant d'augmenter la mouillabilité d'un corps poreux tel que la pointe d'écriture d'un marqueur vis-à-vis de l'encre. Ce procédé consiste à soumettre le corps poreux à un plasma de post-décharge d'azote.

La présente invention vise au contraire à augmenter l'anti-mouillabilité d'un corps poreux, c'est-à-dire réduire sa capacité d'absorption d'un fluide.

Dans les brevets européens 0 516 538 et 0 681 924, on a décrit un marqueur comprenant un corps renfermant un réservoir d'encre, une pointe ayant une extrémité en contact avec l'encre et entourée par un manchon en matière poreuse en polymère.

La demanderesse a constaté que pour assurer un meilleur fonctionnement du marqueur, il y avait avantage à augmenter l'anti-mouillabilité du manchon poreux précité vis-à-vis de l'encre.

L'invention vise précisément à atteindre cet objectif en particulier, sans limiter son application à l'exemple ci-dessus.

Suivant l'invention, le procédé pour augmenter l'anti-mouillabilité d'un corps en matière polymère vis-à-vis d'un fluide, est caractérisé en ce qu'on soumet ledit corps dans une enceinte de traitement, à un plasma d'azote en post-décharge dans lequel on introduit en aval ou en amont de la cavité de décharge, un composé fluoré sous forme de vapeur; tel que défini dans la revendication indépendente 1 et les revendications dépendentes 2 à 13.

Il a été constaté de façon surprenante qu'en soumettant un corps à un plasma généré dans la zone de post-décharge dans un gaz renfermant un composé gazeux fluoré, on augmentait l'anti-mouillabilité dudit corps, à l'inverse de ce que l'on obtient dans un plasma d'azote pur.

On rappellera ici que la zone de post-décharge est une zone éloignée de la zone de décharge proprement dite. Dans cette zone de post-décharge, les espèces atomiques ou moléculaires actives sont neutres (non ionisées).

Les corps traités peuvent être poreux en matière polymère ou une poudre en polymère sous forme de billes.

Le gaz fluoré peut être un polyfluorure de carbone ou un fluorure d'azote (NF₃).

De préférence, la pression du gaz à l'intérieur de l'enceinte de traitement est comprise entre 1 et 200 hecto Pascals.

Dans le cas de la poudre, il est préférable que celle-ci soit mise en suspension dans l'enceinte de traitement, par exemple dans un lit fluidisé ou un réacteur tournant.

Après traitement de la poudre dans l'enceinte de traitement, cette poudre est agglomérée par frittage pour réaliser un corps ayant la forme désirée.

L'invention vise également un corps fritté tel que défini dans la revendication 14.

Un tel procédé permet d'ajuster l'anti-mouillabilité du corps.

D'autres particularités et avantages de l'invention apparaîtront encore dans la description ci-après :

Aux dessins annexés donnés à titre d'exemples non limitatifs :
- la figure 1 est un schéma illustrant un dispositif pour la mise en oeuvre du procédé selon l'invention;
- la figure 2 illustre une variante du dispositif pour la mise en oeuvre du procédé.

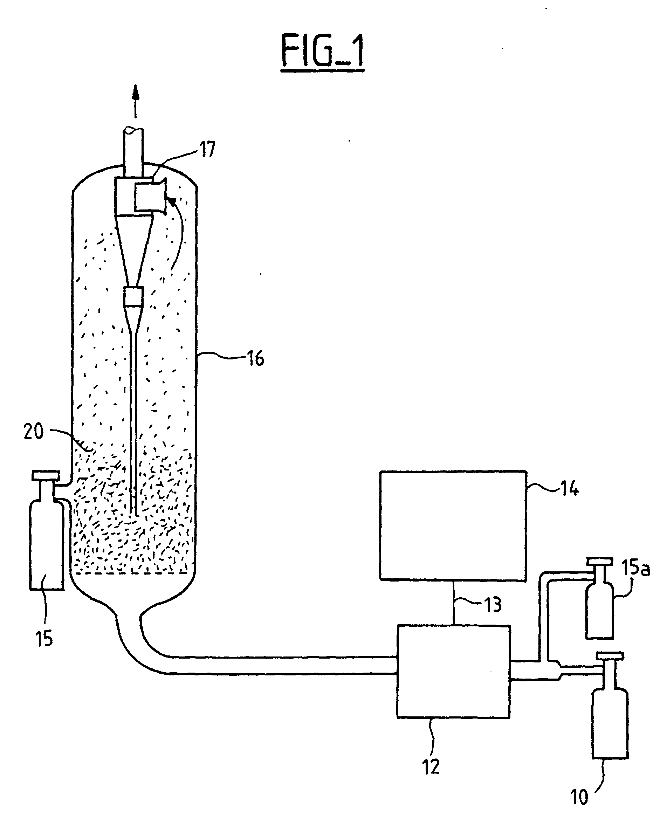

On va d'abord décrire en référence à la figure 1, une installation pour la mise en oeuvre d'un procédé pour augmenter l'anti-mouillabilité d'une poudre 20 vis-à-vis d'un fluide.

Cette installation comprend une source d'azote 10 reliée à une cavité de décharge 12. Le générateur d'ondes 14 permet de produire une onde électromagnétique dans la cavité de décharge 12.

La plage de fréquences pouvant être utilisée est très large : on choisit généralement des fréquences micro-ondes de l'ordre de 880-915 MHz ou 2450 MHz. Des fréquences inférieures, de l'ordre de 13,56 MHz; 27,12 MHz ou 433 MHz peuvent également être utilisées.

Un tube guide d'ondes 13 est prévu entre la sortie du générateur 14 et la cavité de décharge 12. Un circulateur d'eau est prévu autour de ce tube guide d'ondes pour refroidir ce dernier.

La cavité de décharge 12 est reliée par une tubulure à l'enceinte de traitement 16 contenant la poudre 20 à traiter. Dans cette enceinte 16 on introduit un composé fluoré 15 sous forme de vapeur, tel que du NF₃ ou un polyfluorure de carbone. Le composé fluoré peut également être introduit en amont de la cavité de décharge 12, comme indiqué par le repère 15a sur la figure 1.

L'enceinte de traitement 16 est reliée à une pompe à vide qui permet de réaliser une dépression à l'intérieur de l'enceinte 16.

La poudre 20 est mise en suspension sous forme de lit fluidisé.

Pour éviter que la poudre 20 soit aspirée par la pompe à vide, on a disposé en amont de la sortie de l'enceinte 16 et à l'intérieur de celle-ci, un cyclone 17.

Lors de la mise en oeuvre du procédé conforme à l'invention par le dispositif décrit ci-dessus, la poudre 20 est soumise à un plasma dans un gaz fluoré dans l'enceinte de traitement 16, c'est-à-dire à un plasma en post-décharge non-ionique lointaine.

De préférence, la pression du gaz à l'intérieur de l'enceinte de traitement est comprise entre 1 et 200 hecto Pascals.

Après traitement de la poudre dans l'enceinte de traitement 16, cette poudre est agglomérée par frittage pour réaliser un corps ayant la forme désirée.

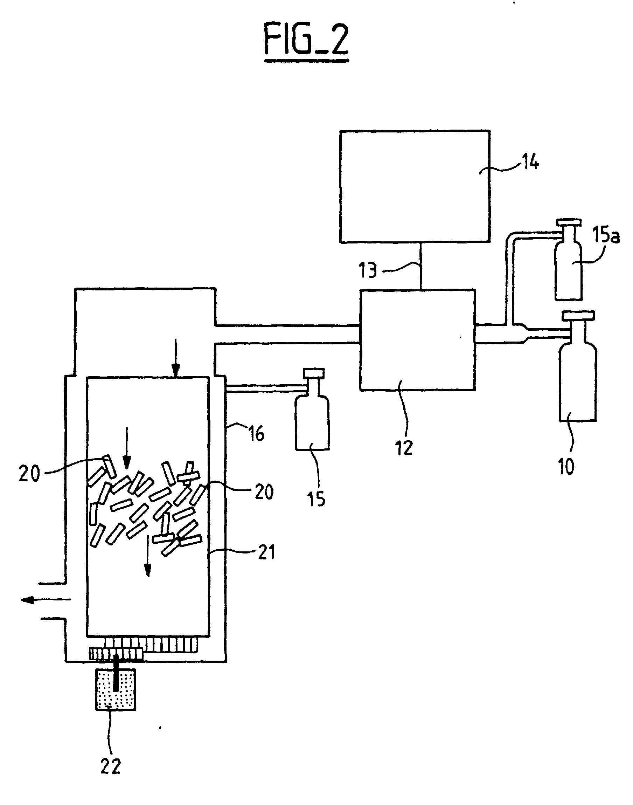

Au lieu de mettre la poudre en suspension sous forme de lit fluidisé, elle peut être mise en suspension dans un réacteur 21 entraîné en rotation par un moteur 22, comme indiqué sur la figure 2.

Cette figure 2 illustre le cas du traitement de corps poreux en matière polymère ou polymère composite.

On constate que les corps poreux 20 et les corps frittés obtenus à partir d'une poudre, traités selon le procédé conforme à l'invention, présentent une anti-mouillabilité (ou un caractère hydrophobe augmenté).

Ce résultat s'explique a posteriori par l'action des éléments fluor présents dans le plasma dont l'effet est inverse de celui procuré par un plasma d'azote.

Conformément à une autre particularité de l'invention, on peut également réaliser des corps frittés constitués partiellement de poudre ou billes traitées selon le procédé conforme à l'invention et partiellement de poudre ou de billes traitées selon un procédé consistant à les soumettre à un plasma généré par une décharge d'onde électromagnétique sur un gaz constitué essentiellement d'azote, comme décrit dans la demande de brevet français n°96 01 700.

Les billes traitées selon les deux procédés ci-dessus, peuvent être mélangées ensemble avant frittage. On obtient ainsi un corps fritté ayant un caractère hydrophile et hydrophobe.

En ajustant les proportions relatives de billes traitées selon les deux procédés ci-dessus, on peut obtenir un corps fritté ayant un caractère hydrophile ou hydrophobe plus ou moins marqué.

Au lieu de mélanger les billes traitées selon les deux procédés ci-dessus, on peut également disposer les billes en couches successives, pour obtenir un corps fritté dans lequel l'anti-mouillabilité augmente progressivement en fonction de la profondeur.

Les corps poreux ou frittés traités selon le procédé selon l'invention peuvent être utilisés dans de nombreuses applications.

Bien entendu, l'invention n'est pas limitée aux exemples que l'on vient de décrire et on peut apporter à ceux-ci de nombreuses modifications sans sortir du cadre de l'invention.

## Revendications

1. Procédé pour augmenter l'anti-mouillabilité d'un corps (20) en matière polymère vis-à-vis d'un fluide, **caractérisé en ce qu'**on soumet ledit corps (20) dans une enceinte de traitement (16), à un plasma d'azote en post-décharge dans lequel on introduit en aval ou en amont de la cavité de décharge (12), un composé fluoré sous forme de vapeur.

2. Procédé conforme à la revendication **1, caractérisé en ce que** le composé gazeux fluoré est un polyfluorure de carbone.

3. Procédé conforme à la revendications **1, caractérisé en ce que** le composé gazeux fluoré est du NF₃.

4. Procédé conforme à l'une des revendications **1** à **3, caractérisé en ce que** la pression du gaz à l'intérieur de l'enceinte de traitement est comprise entre 1 et 200 hecto Pascals.

5. Procédé conforme à l'une des revendications **1** à **4, caractérisé en ce que** ledit corps (20) est un corps poreux fritté en matière polymère ou polymère composite.

6. Procédé conforme à l'une des revendications **1** à **4, caractérisé en ce que** ledit corps (20) est une poudre.

7. Procédé conforme à la revendication 6, **caractérisé en ce que** la poudre est mise en suspension dans l'enceinte de traitement (16).

8. Procédé conforme à la revendication 7, **caractérisé en ce que** ladite poudre est mise en suspension dans un lit fluidisé.

9. Procédé conforme à la revendication 8, **caractérisé en ce que** ladite poudre est mise en suspension dans un réacteur en rotation.

10. Procédé conforme à l'une des revendications 6 à 9, **caractérisé en ce qu'**après traitement de la poudre dans l'enceinte de traitement (16), cette poudre est agglomérée par frittage pour réaliser un corps poreux fritté ayant la forme désirée.

11. Procédé conforme à la revendication 10, **caractérisé en ce que** l'on réalise le corps poreux par frittage de deux poudres, la première poudre étant traitée selon le procédé conforme à l'une des revendications 6 à 9 et la seconde poudra étant traitée selon un procédé consistant à la soumettre à un plasma généré par une décharge d'onde électromagnétique sur un gaz constitué essentiellement d'azote.

12. Procédé conforme à la revendication 11, **caractérisé en ce que** l'on procède au mélange des première et deuxième poudres avant frittage.

13. Procédé conforme à la revendication 11, **caractérisé en ce que** l'on dispose en couches successives les première et deuxième poudres.

14. Corps fritté susceptible d'être obtenu par le procédé selon la revendication 5, par exemple, manchon entourant la pointe d'un marqueur.

## Patentansprüche

1. Verfahren zum Erhöhen der Anti-Benetzbarkeit eines Körpers (20) aus polymerem Material gegenüber einem Fluid, **dadurch gekennzeichnet, dass** der Körper (20) in einem Behandlungsraum (16) einem Stickstoffplasma im Nachleuchten ausgesetzt wird, bei welchem stromabwärts oder stromaufwärts des Entladungshohlraums (12) eine Fluoridverbindung in Dampfform eingebracht wird.

2. Verfahren nach Anspruch 1, **dadurch gekennzeichnet, dass** die gasförmige Fluorverbindung ein Kohlenstoffpolyfluorid ist.

3. Verfahren nach Anspruch 1, **dadurch gekennzeichnet, dass** die gasförmige Fluor Verbindung NF₃ ist.

4. Verfahren nach einem der Ansprüche 1 bis 3, **dadurch gekennzeichnet, dass** der Gasdruck im Innern des Behandlungsraums zwischen 1 und 200 Hektopascal liegt.

5. Verfahren nach einem der Ansprüche 1 bis 4, **dadurch gekennzeichnet, dass** der Körper (20) ein gesinterter poröser Körper aus polymerem Material oder Verbundpolymer ist.

6. Verfahren nach einem der Ansprüche 1 bis 4, **dadurch gekennzeichnet, dass** der Körper (20) ein Pulver ist.

7. Verfahren nach Anspruch 6, **dadurch gekennzeichnet, dass** das Pulver in dem Behandlungsraum (16) suspendiert wird.

8. Verfahren nach Anspruch 7, **dadurch gekennzeichnet, dass** das Pulver in einem Fließbett suspendiert wird.

9. Verfahren nach Anspruch 8, **dadurch gekennzeichnet, dass** das Pulver in einem Rotationsreaktor suspendiert wird.

10. Verfahren nach einem der Ansprüche 6 bis 9, **dadurch gekennzeichnet, dass** dieses Pulvers nach seiner Behandlung in dem Behandlungsraum (16) gesintert wird, um einen gesinterten porösen Körper mit der gewünschten Form herzustellen.

11. Verfahren nach Anspruch 10, **dadurch gekennzeichnet, dass** der poröse Körper durch Sintern zweier Pulver hergestellt wird, wobei das erste Pulver entsprechend dem Verfahren nach einem der Ansprüche 6 bis 9 behandelt ist, und das zweite Pulver nach einem Verfahren behandelt ist, welches darin besteht, dass es einem Plasma ausgesetzt ist, das durch eine elektromagnetische Wellenentladung auf ein im wesentlichen aus Stickstoff bestehendes Gas erzeugt wird.

12. Verfahren nach Anspruch 11, **dadurch gekennzeichnet, dass** man die ersten und zweiten Pulver vor dem Sintern mischt.

13. Verfahren nach Anspruch 11, **dadurch gekennzeichnet, dass** man die ersten und zweiten Pulver in aufeinanderfolgenden Schichten anordnet.

14. Gesinterter Körper, erhältlich durch das Verfahren nach Anspruch 5, beispielsweise eine die Spitze eines Markierstifts umgebende Muffe.

## Claims

1. Method for increasing the anti-wettability of a body (20) based on polymer material vis-à-vis a fluid, **characterised in that** the said body (20) is subjected, in a treatment chamber (16), to a post-discharge nitrogen plasma in which a fluorinated compound in the form of vapour is introduced downstream or upstream of the discharge cavity (12).

2. Method according to Claim 1, **characterised in that** the fluorinated gaseous compound is a carbon polyfluoride.

3. Method according to Claim 1, **characterised in that** the fluorinated gaseous compound is NF₃.

4. Method according to one of Claims 1 to 3, **characterised in that** the pressure of the gas inside the treatment chamber is between 1 and 200 hectopascals.

5. Method according to one of Claims 1 to 4, **characterised in that** the said body (20) is a sintered porous body made from polymer or composite polymer material.

6. Method according to one of Claims 1 to 4, **characterised in that** the said body (20) is a powder.

7. Method according to Claim 6, **characterised in that** the powder is put in suspension in the treatment chamber (16).

8. Method according to Claim 7, **characterised in that** the said powder is put in suspension in a fluidised bed.

9. Method according to Claim 8, **characterised in that** the said powder is put in suspension in a rotating reactor.

10. Method according to one of Claims 6 to 9, **characterised in that**, after treatment of the powder in the treatment chamber (16), this powder is agglomerated by sintering in order to produce a sintered porous body having the required shape.

11. Method according to Claim 10, **characterised in that** the porous body is produced by sintering two powders, the first powder being treated according to the method according to one of Claims 6 to 9 and the second powder being treated according to a method consisting of subjecting it to a plasma generated by an electromagnetic wave discharge on a gas consisting essentially of nitrogen.

12. Method according to Claim 11, **characterised in that** the first and second powders are mixed before sintering.

13. Method according to Claim 11, **characterised in that** the first and second powders are disposed in successive layers.

14. Sintered body able to be obtained by the method according to Claim 5, for example the sleeve surrounding the tip of a marker.
